# EUROPÄISCHE PATENTANMELDUNG

(11) **EP 2 463 742 A1**
(43) Veröffentlichungstag der Anmeldung: **13.06.2012**
(21) Anmeldenummer: 10190728.5
(22) Anmeldetag: 10.11.2010
(51) Int. Cl.: G06F 1/16

(54) **Notebook-Computer mit Schreib-/Lesekopffixierung**

(71) Anmelder: Siemens Aktiengesellschaft, 80333 München (DE)
(72) Erfinder: Andlauer, Timo, 76185, Karlsruhe (DE); Jülg, Edmund, 76534, Baden-Baden (DE)

(57) **Zusammenfassung**

Die Erfindung betrifft ein elektrisches Gerät, insbesondere Notebook, mit einem Tragegriff (2), welcher in einer ausgezogenen oder ausgeklappten Stellung zum Transport des Gerätes (1) vorgesehen ist, und/oder mit einer Verriegelung, welche in einer Verriegelungsstellung ein Display (7) des Gerätes (1) mit einem Gehäuseteil (3) des Gerätes (1) verriegelt, und mit einem Festplattenlaufwerk (4) und einer Steuerelektronik (5), die in Abhängigkeit eines Sensorsignals eine Fixierung der Schreib-/Leseköpfe des Festplattenlaufwerks (4) in eine Parkposition einleitet. Es werden Maßnahmen vorgeschlagen, mit welchen die Fixierung der Schreib-/Leseköpfe vereinfacht wird.

## Beschreibung

Die Erfindung betrifft ein elektrisches Gerät, insbesondere Notebook, mit einem Tragegriff, welcher in einer ausgezogenen oder ausgeklappten Stellung zum Transport des Notebooks vorgesehen ist, und/oder mit einer Verriegelung, welche in einer Verriegelungsstellung ein Display des Gerätes mit einem Gehäuseteil des Gerätes verriegelt, und mit einem Festplattenlaufwerk und einer Steuerelektronik, die in Abhängigkeit eines Sensorsignals eine Fixierung der Schreib-/Leseköpfe des Festplattenlaufwerks in eine Parkposition einleitet.

Ein derartiges elektrisches Gerät in Form eines Industrie-Notebooks ist aus der Siemens-Betriebsanleitung "Programmiergerät SIMATIC Field PG M3", 09/2010 bekannt. Für den Fall, dass das Notebook während des Transports eingeschaltet ist, besteht die Gefahr, dass die Festplatte oder die Schreib-/Leseköpfe des Festplattenlaufwerks beschädigt oder zerstört werden; denn ein sehr dünnes Luftpolster zwischen den Schreib-/Leseköpfen und dem Speichermedium kann z. B. während des Transports durch einen Schlag oder Stoß auf das in einem Run-Betrieb geschaltete Notebook unterbrochen werden, wodurch die Schreib-/Leseköpfe das Speichermedium berühren. Um dies weitgehend zu vermeiden, kann das Notebook mit einem so genannten Schocksensor versehen werden. Falls dieser einen zu hohen Beschleunigungswert beispielsweise während eines freien Falls des Notebooks erfasst, übermittelt der Schocksensor ein Signal, welches die Fixierung der Schreib-/Leseköpfe in eine Parkposition einleitet. Dazu wird aus diesem Signal eine dieses Signal repräsentierende Anweisung oder ein repräsentierender Befehl erzeugt, die bzw. der von einem Festplatten-Treiberbaustein des Notebooks verarbeitet wird. Nachteilig ist, dass ein sehr empfindlicher Schocksensor eingesetzt werden muss, um während des Transports des in den Run-Betrieb geschalteten Notebooks rechtzeitig die Fixierung der Schreib-/Leseköpfe zu bewerkstelligen. Um eine rechtzeitige Fixierung während des Transports sicherzustellen, kann das Notebook mittels einer geeigneten Eingabe eines Anwenders vor dem Transport von einem Run-Betrieb in einen Standby-Modus oder Ruhezustand geschaltet werden. Im Rahmen dieser Umschaltung wird ebenfalls die Anweisung bzw. der Befehl zur Fixierung der Schreib-/Leseköpfe genutzt.

Der Erfindung liegt daher die Aufgabe zugrunde, ein elektrisches Gerät der eingangs genannten Art zu schaffen, mit welchem die Fixierung der Schreib-/Leseköpfe vereinfacht werden kann.

Diese Aufgabe wird durch die im kennzeichnenden Teil des Anspruchs 1 angegebenen Maßnahmen gelöst.

Vorteilhaft ist, dass ein ohnehin vorhandener Tragegriff des elektrischen Gerätes oder eine ohnehin vorhandene Display-Verriegelung vor dem Transport für eine Fixierung vorgesehen ist, wobei ein ausgezogener bzw. ausgeklappter Tragegriff oder ein verriegeltes Display auf einen bevorstehenden Transport hinweist.

In einer Ausgestaltung der Erfindung ist vorgesehen, die Erfassung der Display-Verriegelung zu deaktivieren, wodurch trotz Verriegelung das Gerät einsatzbereit ist. Es kann vorkommen, dass z. B. eine an ein Notebook angeschlossene Anzeigeeinheit mit hoher Auflösung anstatt dem Notebook-Display eingesetzt wird, wobei gewöhnlich das Notebook zugeklappt wird. In dieser Stellung ist das Display mit dem unteren Gehäuseteil des Notebooks zwar verriegelt, dennoch bleibt in diesem Fall das Notebook im Run-Betrieb, falls die Erfassung der Display-Verriegelung deaktiviert ist.

Anhand der Zeichnung, in der ein Ausführungsbeispiel der Erfindung veranschaulicht ist, werden im Folgenden die Erfindung, deren Ausgestaltungen sowie Vorteile näher erläutert.

### Es zeigen:

- Figur 1: ein zugeklapptes Notebook,
- Figur 2: ein aufgeklapptes Notebook und

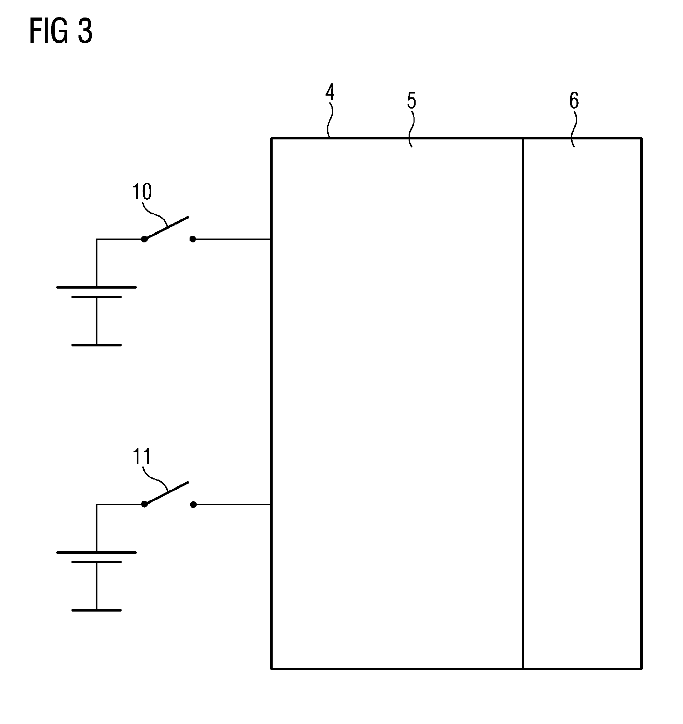

- Figur 3: eine schematische Darstellung von Elementen einer Festplatten-Transportsicherung.

Die in den Figuren dargestellten gleichen Teile sind mit gleichen Bezugszeichen versehen.

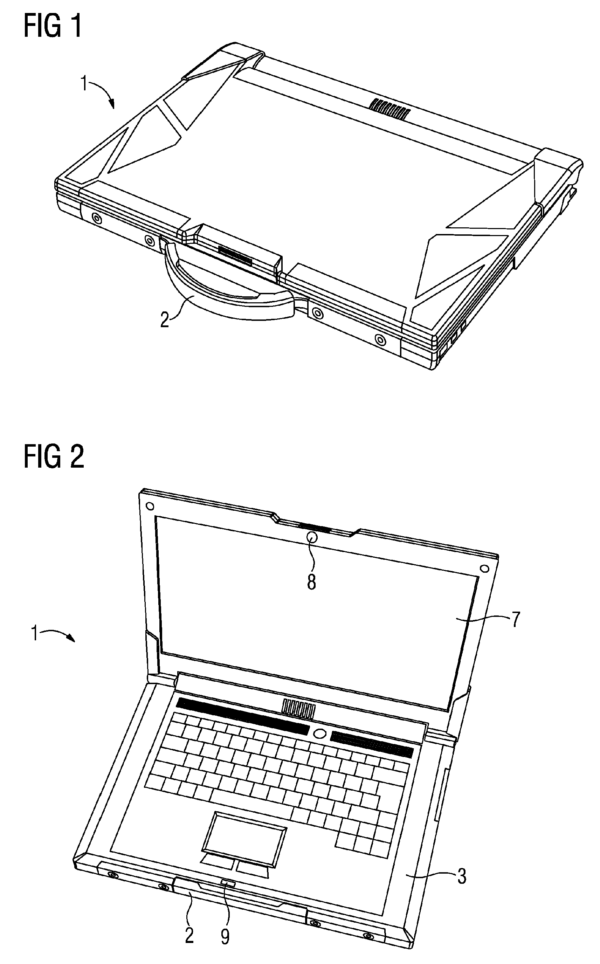

Ein mit 1 bezeichnetes Notebook weist einen Tragegriff 2 und eine Display-Verriegelung sowie ein in einem unteren Gehäuseteil 3 des Notebooks 1 angeordnetes Festplattenlaufwerk 4 mit einer Festplatten-Steuerelektronik 5 und einem Speichermedium 6 auf. Die Display-Verriegelung umfasst ein an einem Display 7 angeordnetes Rastelement 8 sowie ein zu diesem Rastelement 8 korrespondierendes Gegenrastelement, welches in einer Ausnehmung 9 des unteren Gehäuseteils 3 angeordnet ist. Für den Fall, dass ein Anwender den Tragegriff 2 von einer Grundstellung (Figur 2) in eine Transportstellung bringt (Figur 1), indem der Anwender den Tragegriff 2 ausklappt bzw. aus einer Halterung herauszieht, schließt ein Schalter 10, wodurch der Steuerelektronik 5 ein Signal zugeführt wird. Die Steuerelektronik 5 leitet aufgrund dieses Signals die Fixierung der Schreib-/Leseköpfe eines in dem Gehäuseteil 3 angeordneten Festplattenlaufwerks 4 ein, wobei dazu die Steuerelektronik 5 dieses Signal in eine entsprechende Anweisung oder in einen entsprechenden Befehl umsetzt. Ein Festplatten-Treiberbaustein des Notebooks 1 verarbeitet die Anweisung bzw. den Befehl, wobei dieser Treiberbaustein geeignete elektromechanische Mittel ansteuert, um die Schreib-/Leseköpfe in einer Parkposition zu fixieren.

Die Fixierung der Schreib-/Leseköpfe in die Parkposition wird auch dadurch bewirkt, indem der Anwender das Notebook 1 zuklappt, wodurch das erste Rastelement 8 in das zweite Gegenrastelement des unteren Gehäuseteils 3 lösbar einrastet bzw. verriegelt. Dadurch schließt ein weiterer im Gehäuseteil 3 angeordneter Schalter 11, wodurch der Steuerelektronik 5 wiederum ein Signal zugeführt wird und diese in der beschriebenen Art und Weise die Fixierung der Schreib-/Leseköpfe in die Parkposition einleitet.

Für den Fall, dass auch mit dem zugeklappten Notebook 1 weitergearbeitet werden soll, weil z. B. an das Notebook 1 eine Anzeigeeinheit mit hoher Auflösung angeschlossen wird, kann die Verriegelung deaktiviert werden. Dies wird beispielsweise dadurch bewirkt, dass der Anwender vor dem Zuklappen des Notebooks 1 das Rastelement 8 in eine Stellung verschiebt, in der das Rastelement 8 den weiteren Schalter 11 bei zugeklapptem Notebook 1 nicht schließen kann.

## Patentansprüche

1. Elektrisches Gerät, insbesondere Notebook,
- mit einem Tragegriff (2), welcher in einer ausgezogenen oder ausgeklappten Stellung zum Transport des Gerätes (1) vorgesehen ist, und/oder
- mit einer Verriegelung, welche in einer Verriegelungsstellung ein Display (7) des Gerätes (1) mit einem Gehäuseteil (3) des Gerätes (1) verriegelt, und
- mit einem Festplattenlaufwerk (4) und einer Steuerelektronik (5), die in Abhängigkeit eines Sensorsignals eine Fixierung der Schreib-/Leseköpfe des Festplattenlaufwerks (4) in eine Parkposition einleitet,
**dadurch gekennzeichnet, dass** mindestens ein Sensor (10, 11) die Stellung des Tragegriffs (2) und/oder der Verriegelung erfasst und in Abhängigkeit der Stellung das Signal erzeugt.

2. Elektrisches Gerät nach Anspruch 1, **dadurch gekennzeichnet, dass** das Gerät (1) dazu ausgebildet ist, die Erfassung der Display-Verriegelung zu deaktivieren.

3. Elektrisches Gerät nach Anspruch 1 oder 2, **dadurch gekennzeichnet, dass** der mindestens eine Sensor (10, 11) ein mechanischer, magnetischer oder optischer Schalter ist.
